# DEMANDE DE BREVET EUROPEEN

(11) **EP 4 700 459 A2**
(43) Date de publication de la demande: **25.02.2026**
(21) Numéro de dépôt: 25218942.8
(22) Date de dépôt: 03.07.2015
(51) Int. Cl.: G02C 7/04

(54) **LENTILLE OPHTALMIQUE AYANT DES PROPRIÉTÉS ANTISALISSURE DIFFÉRENCIÉES SUR SES DEUX FACES ET PROCÉDÉS DE FABRICATION**

(30) Priorité: 03.07.2014 FR 1456414
(62) Demande divisionnaire de: 15742364.1
(71) Demandeur: ESSILOR INTERNATIONAL, 94220 Charenton-Le-Pont (FR)
(72) Inventeur: LAPPRAND, Aude, 94220 CHARENTON LE PONT (FR); LACAN, Pascale, 94220 CHARENTON LE PONT (FR); VALENTI, Christophe, 94220 CHARENTON LE PONT (FR)
(74) Mandataire: Jacobacci Coralis Harle

(57) **Abrégé**

La présente invention concerne une lentille ophtalmique dont les faces avant et arrière sont différenciées au niveau de leurs propriétés hydrophobes. Ladite lentille comprenant un substrat ayant une face principale avant hydrophobe, et une face principale arrière dont la surface externe présente notamment un angle de contact de reculée avec l'eau supérieur ou égal à 110°, la surface externe de ladite face principale avant présentant un angle de contact de reculée avec l'eau inférieur à celui de la face principale arrière et compris entre 104° et 116°. L'invention présente différents moyens de préparer de telles lentilles, qui peuvent notamment être obtenues après dépôt puis retrait de couches temporaires sur l'une ou les deux faces de la lentille.

## Description

La présente invention concerne une lentille ophtalmique, comportant un revêtement présentant un angle de contact de reculée avec l'eau d'au moins 80° sur sa face arrière, et dont les deux faces se différencient par leurs propriétés antisalissure, des lentilles ophtalmiques intermédiaires comportant une ou des couches temporaires servant à préparer ces lentilles, ainsi que des procédés de fabrication de ces lentilles.

Il est connu d'appliquer sur des lentilles ophtalmiques pour lunettes des revêtements antisalissure, également dénommés "revêtements hydrophobes et/ou oléophobes". Ils sont généralement obtenus à partir de fluorosilanes ou fluorosilazanes, c'est-à-dire des silanes ou des silazanes contenant des atomes de fluor.

Les revêtements antisalissure abaissent l'énergie de surface de la lentille, de sorte que l'adhérence des salissures est réduite et celles-ci sont plus facilement éliminables par essuyage, notamment en utilisant des tissus en microfibres.

Ainsi les revêtements antisalissure les plus performants possèdent de faibles énergies de surface, typiquement des énergies de surface inférieures ou égales à 14 mJ/m², et généralement inférieures ou égales à 12 mJ/m².

Les énergies de surface sont calculées dans la présente demande selon la méthode OWENS-WENDT décrite dans la référence suivante : "Estimation of a surface force energy of polymers" OWENS D.K., WENDT R.G. (1969) J. Appl. Polym. Sci, 13, 1741-1747.

Les revêtements antisalissure hydrophobes et/ou oléophobes sont appliqués en face avant et en face arrière des lentilles ophtalmiques commerciales.

D'une manière générale, par face arrière (ou face concave) d'une lentille ophtalmique, on entend la face qui, lors de l'utilisation de la lentille, est la plus proche de l'œil du porteur. Inversement, par face avant (ou face convexe) de la lentille, on entend la face qui, lors de l'utilisation de la lentille, est la plus éloignée de l'œil du porteur.

En pratique, les lentilles ophtalmiques commerciales pour lunettes présentent des propriétés antisalissure identiques sur leurs deux faces ou sensiblement meilleures sur leur face avant et il est communément admis que la face avant d'une lentille ophtalmique est la face la plus soumise aux sollicitations extérieures et en particulier à la salissure.

Le problème technique lié au débordage/ détourage est maintenant décrit plus en détail.

Une lentille résulte d'une succession d'opérations de moulage et/ou de surfaçage/polissage qui déterminent la géométrie des deux surfaces optiques convexe et concave de ladite lentille, puis de traitements de surface appropriés.

La dernière étape de finition d'une lentille ophtalmique est l'opération de débordage (ou détourage), qui consiste à usiner la tranche ou périphérie de la lentille de façon à la conformer aux dimensions et à la forme requises pour adapter cette lentille à la monture de lunettes dans laquelle elle est destinée à prendre place. Elle est réalisée généralement par l'opticien qui effectue ensuite le montage des verres dans la monture.

Le débordage est réalisé généralement sur une meuleuse comprenant des meules diamantées et/ou des têtes fraiseuses qui effectuent l'usinage de la périphérie (ou de la tranche) de la lentille. La lentille est maintenue, lors de cette opération, par des organes de blocage intervenant axialement.

Le mouvement relatif de la lentille par rapport à la meule est contrôlé, généralement numériquement, afin de réaliser la forme souhaitée.

Comme cela apparaît, il est tout à fait impératif que la lentille soit fermement maintenue lors de ce mouvement. Pour cela, avant l'opération de débordage, on effectue une opération de glantage de la lentille, c'est à dire que l'on vient positionner, généralement sur la surface convexe de la lentille, un moyen de maintien.

Généralement, le moyen de maintien est un gland qui adhère à la lentille grâce à un patin de maintien (ou patin de fixation), tel qu'une pastille autocollante, par exemple un patin comportant un adhésif sur ses deux faces (généralement de type PSA-pressure sensitive adhesive-adhésif sensible à la pression). Ce patin de maintien est disposé entre le gland et la surface convexe et/ou concave de la lentille, de préférence la surface convexe.

Selon un autre mode de réalisation, le moyen de maintien est un gland qui adhère à la lentille grâce à un adhésif liquide polymérisable (durcissable) disposé entre le gland et la surface convexe et/ou concave de la lentille, de préférence la surface convexe (procédé OBM^{™} de la société Satisloh). Le gland peut aussi être intégralement moulé sur la lentille.

Le gland auquel adhère la lentille par l'intermédiaire du patin adhésif est alors mécaniquement fixé sur un premier organe axial de blocage de la meuleuse et un second organe de blocage axial vient bloquer la lentille par l'intermédiaire d'une butée, généralement en élastomère, en appliquant une force centrale sur la face de la lentille opposée au gland (généralement, sa face concave).

Lors de l'usinage, un effort de couple tangentiel est généré sur la lentille, ce qui peut engendrer une rotation de celle-ci par rapport au gland si le système de maintien de la lentille n'est pas assez efficace. Le bon maintien de la lentille dépend principalement de la bonne adhérence à l'interface moyen de maintien/surface de la lentille.

Un des problèmes entraînés par les faibles énergies de surface des couches hydrophobes et/ou oléophobes est que l'adhérence à l'interface moyen de maintien/lentille se trouve altérée, ce qui rend difficile des opérations de débordage satisfaisantes. La lentille peut en effet glisser et se désaxer lors de l'étape de débordage.

Lorsque le débordage est effectué de façon satisfaisante, la lentille présente les dimensions requises pour convenablement s'insérer dans la monture qui lui est destinée. Plus précisément, ce résultat est obtenu lorsque la lentille, lors de l'opération de débordage, subit un désaxage maximum de 1 ou 2°. Au-delà, la lentille est généralement perdue. L'adhésion du moyen de maintien à la surface de la lentille est donc essentielle à l'obtention d'un débordage satisfaisant.

Pour remédier à ces difficultés de débordage des lentilles pourvues d'un revêtement externe hydrophobe et/ou oléophobe, une solution technique existe qui consiste à former sur ces revêtements des revêtements temporaires (ou couches/surcouches temporaires) de nature organique ou minérale permettant d'éviter le désaxage lors du débordage, tout en préservant les propriétés du revêtement antisalissure. Les revêtements temporaires peuvent être en particulier des couches temporaires de MgF₂, des revêtements pelables de nature polymère ou des films adhésifs temporaires de nature polymère. Ces couches temporaires sont décrites notamment dans les demandes EP 1392613, EP 1633684, WO 2005/015270, WO 03/057641.

Les lentilles sont livrées à l'opticien pourvues des couches temporaires.

En pratique, même si la face avant de la lentille est généralement la seule qui sera en contact avec le gland lors du débordage, on dépose habituellement sur la face arrière de la lentille la même couche temporaire que sur la face avant de la lentille (même matériau, même épaisseur). La couche temporaire présente sur la face arrière contribue au bon maintien de la lentille en assurant un bon contact entre sa face arrière et la butée de débordage.

Le couple de torsion se répartit entre la face avant et la face arrière de la lentille lors de l'opération de débordage.

Ainsi la présence d'une couche temporaire en face arrière de la lentille contribue également à limiter le désaxage de la lentille lors de l'opération de débordage.

Après le débordage de la lentille, les couches temporaires doivent être ôtées pour laisser apparent le revêtement antisalissure. Cette opération est également effectuée par l'opticien qui a procédé au débordage du verre. Une fois la couche temporaire retirée, les propriétés du revêtement hydrophobe, même si celles-ci sont globalement bien préservées, peuvent être parfois inférieures à celles du revêtement avant dépôt de la couche temporaire. En particulier, l'angle de contact peut être inférieur de quelques degrés par rapport à celui du revêtement hydrophobe avant dépôt de la couche temporaire, ce qui signifie que les propriétés hydrophobes du revêtement ont été diminuées.

Par ailleurs, la durabilité (le maintien des propriétés hydrophobes du revêtement sous l'effet d'essuyages répétés) peut être affectée.

La demande FR 1262953 propose une solution pour obtenir après retrait de la couche temporaire une lentille ophtalmique à propriétés antisalissure améliorées par rapport aux lentilles ophtalmiques comportant un revêtement hydrophobe et une couche temporaire classique, telle qu'une surcouche de fluorure métallique. Cette demande propose typiquement de déposer sur la lentille deux couches de revêtement hydrophobe et/ou oléophobe (une couche d'Optool DSX^{®} et une couche d'OF210^{®}) puis une couche temporaire bicouche composée d'une couche de MgF₂ de 22 à 50 nm d'épaisseur et d'une couche de MgO optionnelle).

Le problème est qu'il reste difficile d'améliorer de façon importante les propriétés antisalissure d'une lentille en conservant simultanément l'aptitude au débordage.et un retrait suffisamment aisé de la couche temporaire.

Ces propriétés sont antagonistes.

S'il est souhaitable d'augmenter l'épaisseur des revêtements hydrophobes et/ou oléophobes afin d'atteindre des niveaux d'hydrophobie et d'oléophobie maximum et donc de disposer de verres plus nettoyables, on perd l'adhérence du patin.

Augmenter corollairement l'épaisseur de la couche temporaire rend celle-ci plus difficile à éliminer.

Ainsi, de nombreux problèmes techniques restent à résoudre pour fournir de nouvelles lentilles à hydrophobie améliorée.

Ainsi, un objectif de l'invention est de fournir une lentille ophtalmique ayant des performances antisalissure améliorées par rapport aux lentilles ophtalmiques existantes.

Par exemple, les matériaux utilisés comme couches hydrophobes, en particulier les matériaux les plus performants, présentant une haute hydrophobie, sont des matériaux chers.

Or il est important de pouvoir développer l'accès des verres antisalissure à des marchés dit de « moyenne gamme » à coût plus faibles.

Un problème technique à résoudre consiste donc à fournir une lentille ophtalmique dont les propriétés antisalissure sont améliorées à moindre coût par rapport aux lentilles ophtalmiques porteuses de revêtements antisalissure classiques.

Un autre problème technique à résoudre vise au contraire à fournir une lentille ophtalmique présentant des propriétés antisalissure surpassant les propriétés des lentilles ophtalmiques les plus performantes connues dans l'état de l'art des lentilles ophtalmiques, sans que le facteur coût soit prépondérant, pour des marchés de type « premium ».

Un autre problème technique consiste à fournir une lentille ophtalmique présentant à la fois des propriétés antisalissure et anti-abrasion améliorées par rapport aux lentilles ophtalmiques connues.

Un autre problème technique consiste à fournir une lentille ophtalmique antisalissure permettant de diminuer la perception visuelle des salissures par un porteur de lunettes, et /ou d'augmenter son acuité visuelle, en particulier le contraste visuel, dans différentes conditions de port et d'environnement lumineux.

Un dernier problème technique consiste à fournir une lentille ophtalmique débordable (ou détourable) par des moyens classiques et conduisant à une lentille ophtalmique résolvant également l'un au moins des quatre problèmes ci-dessus.

A l'origine de l'invention, les inventeurs ont constaté que, de façon surprenante, et à l'encontre de ce qui était communément admis, il convenait d'améliorer les propriétés antisalissure en face arrière d'une lentille ophtalmique plutôt qu'en face avant ou concomitamment sur les deux faces.

Ainsi, les lentilles selon l'invention ont des propriétés de la face avant qui diffèrent significativement de celles de la face arrière avec des valeurs d'angle de contact de reculée avec l'eau plus élevées en face arrière qu'en face avant.

Les lentilles ophtalmiques antérieures comportent généralement des revêtements hydrophobes et/ou oléophobes identiques sur leur face avant et leur face arrière. De même, des couches temporaires déposées en vue de faciliter le débordage sont de nature et d'épaisseur identique sur la face avant et la face arrière de la lentille.

Or, les inventeurs ont trouvé qu'il était avantageux de produire des lentilles ophtalmiques dont les faces avant et arrière sont différenciées au niveau de leurs propriétés hydrophobes.

Les objectifs ci-dessus peuvent donc être atteints séparément ou en combinaison au moyen d'une lentille ophtalmique comprenant un substrat ayant :
- une face principale avant dont la surface externe est hydrophobe et présente un angle de contact de reculée avec l'eau WRA1 et

- une face principale arrière dont la surface externe présente un angle de contact de reculée avec l'eau WRA2 supérieur ou égal à 80°, et WRA2 est supérieur à WRA1.

Les lentilles ophtalmiques selon l'invention ont une face arrière qui présente des propriétés antisalissure supérieures à celles de la face avant.

Il apparaît par ailleurs que, pour des couches hydrophobes, la propriété de résistance à l'abrasion varie dans le sens opposé aux propriétés de surface. Moins la couche est hydrophobe et plus la résistance à l'abrasion (mesuré par le tes Bayer (sable ou alumine) est élevée. L'invention permet donc d'améliorer la résistance à l'abrasion de la face avant de la lentille.

La face arrière de la lentille est celle qui est la plus proche de la peau et des cils, qui sont des sources importantes de salissures. Les inventeurs ont constaté que La salissure sur la face arrière est perçue comme particulièrement gênante par un porteur de lunette.

Il est à noter qu'habituellement, les lentilles ophtalmiques ont une face arrière qui présente des propriétés d'hydrophobie inférieures à celles de la face avant.

En effet, le plus souvent, des traitements de surface par des espèces activées avant ou pendant le dépôt de revêtement (en particulier les couches d'antireflet) sur les faces sont mises en œuvre. Or, la surface arrière d'une lentille est généralement la première des deux faces de la lentille à recevoir le dépôt de revêtements, qui met en jeu un prétraitement d'activation physique ou chimique préalable de la surface de la lentille, destiné à augmenter l'adhésion des revêtements. Ce prétraitement est généralement conduit sous vide. Il peut s'agir d'un bombardement avec des espèces énergétiques, par exemple un faisceau d'ions ("Ion Pre-Cleaning" ou "IPC") ou un faisceau d'électrons, d'un traitement par décharge corona, par effluvage, d'un traitement UV, ou d'un traitement par plasma sous vide, généralement un plasma d'oxygène ou d'argon. Il peut aussi s'agir d'un traitement d'assistance, par exemple de bombardement ionique, lors du dépôt d'une couche, par exemple une couche conductrice comme une couche d'ITO (Indium Tin Oxide). Lorsque la face avant de la lentille est à son tour traitée, le prétraitement d'activation physique ou chimique qu'elle subira dégradera légèrement le revêtement hydrophobe présent sur la face arrière, du fait d'un phénomène de rétrodiffusion des espèces réactives, et ce même si ce revêtement hydrophobe est protégé par une couche temporaire. La conséquence de ce phénomène de rétrodiffusion, si les deux faces de la lentille ont reçu le même traitement hydrophobe, est que la lentille présente des propriétés hydrophobes légèrement inférieures sur la première surface traitée, généralement la face arrière.

Les lentilles ophtalmiques selon l'invention peuvent être utilisées pour améliorer la perception visuelle d'un porteur de lunettes et/ou améliorer son confort visuel.

Dans la présente demande, un revêtement qui est "sur" un substrat/revêtement ou qui a été déposé "sur" un substrat/revêtement est défini comme un revêtement qui (i) est positionné au-dessus du substrat/revêtement, (ii) n'est pas nécessairement en contact avec le substrat/revêtement, c'est-à-dire qu'un ou plusieurs revêtements intermédiaires peuvent être disposés entre le substrat/revêtement et le revêtement en question (toutefois, il est de préférence en contact avec ledit substrat/revêtement), Lorsque "une couche 1 est localisée sous une couche 2", on comprendra que la couche 2 est plus éloignée du substrat que la couche 1. De même une couche dite "externe " est plus éloignée du substrat qu'une couche dite "interne".

La lentille selon l'invention comprend un substrat, de préférence transparent, ayant des faces principales avant et arrière, dont la face arrière au moins, de préférence les deux faces principales, comprend un revêtement hydrophobe, de préférence hydrophobe et oléophobe.

La lentille ophtalmique selon l'invention peut être une ébauche de lentille ophtalmique. Elle constitue de préférence une lentille ophtalmique pour lunettes, et est dans un mode de réalisation insérée dans une paire de lunettes.

Le substrat de la lentille ophtalmique selon l'invention peut être un verre minéral ou organique, par exemple un verre organique en matière plastique thermoplastique ou thermodurcissable.

Ce substrat peut être choisi parmi les substrats cités dans la demande WO 2008/062142, par exemple un substrat obtenu par (co)polymérisation du bis allyl carbonate du diéthylèneglycol, un substrat en poly(thio)uréthane, un substrat en polycarbonate de bis(phénol A) (thermoplastique), noté PC, ou un substrat en PMMA (polyméthacrylate de méthyle).

Les revêtements hydrophobes utilisés pour l'invention peuvent être formés sur une face principale d'un substrat nu, c'est-à-dire non revêtu, ou sur une face principale d'un substrat déjà revêtu d'un ou plusieurs revêtements fonctionnels.

Ces revêtements fonctionnels classiquement utilisés en optique peuvent être, sans limitation, une couche de primaire antichoc, un revêtement anti-abrasion et/ou anti-rayure, un revêtement polarisé, un revêtement photochrome ou un revêtement coloré, un revêtement interférentiel, en particulier une couche de primaire antichoc revêtue d'une couche anti-abrasion et/ou anti-rayures.

Le revêtement hydrophobe peut être déposé sur un revêtement interférentiel qui peut être, sans limitation, un revêtement antireflet, un revêtement réfléchissant (miroir), un filtre infrarouge, un filtre ou un revêtement antireflet coupant au moins partiellement la lumière bleue ou un filtre ultraviolet, de préférence un revêtement antireflet.

Un revêtement antireflet se définit comme un revêtement, déposé à la surface d'un article, qui améliore les propriétés anti-réfléchissantes de l'article final. Il permet de réduire la réflexion de la lumière à l'interface article-air sur une portion relativement large du spectre visible. De préférence Rv le facteur moyen de réflexion lumineux est inférieur à 2,5% par face.

Rv est tel que défini dans la dans la norme ISO13666 :1998 et mesuré selon la norme iS 8980-4 (pour un angle d'incidence de la lumière inférieur à 17°, typiquement 15°). De préférence RV<2%, mieux Rv<1, 5% et encore mieux Rv<1%.

Comme cela est bien connu également, les revêtements antireflet comprennent classiquement un empilement monocouche ou multicouche de matériaux diélectriques. Ce sont de préférence des revêtements multicouches, comprenant des couches de haut indice de réfraction (HI) et des couches de bas indice de réfraction (BI). La constitution de ces revêtements, leur épaisseur et leur mode de dépôt sont décrits notamment dans la demande WO 2010/109154.

Le revêtement interférentiel est généralement déposé sur un revêtement anti-abrasion et/ou anti-rayure, qui peut être toute couche classiquement utilisée comme revêtement anti-abrasion et/ou anti-rayure dans le domaine des lentilles ophtalmiques.

Les revêtements résistant à l'abrasion et/ou aux rayures sont de préférence des revêtements durs à base de poly(méth)acrylates ou de silanes comprenant généralement une ou plusieurs charges minérales destinées à augmenter la dureté et/ou l'indice de réfraction du revêtement une fois durci. Par (méth)acrylate, on entend un acrylate ou un méthacrylate.

Parmi les revêtements recommandés dans la présente invention, on peut citer les revêtements à base d'hydrolysats d'époxysilanes tels que ceux décrits dans les brevets EP 0614957, US 4,211,823 et US 5,015,523. L'épaisseur du revêtement anti-abrasion et/ou anti-rayure varie généralement de 2 à 10 µm, préférentiellement de 3 à 5 µm.

Préalablement au dépôt du revêtement anti-abrasion et/ou anti-rayure, il est possible de déposer sur le substrat un revêtement de primaire améliorant la résistance au choc et/ou l'adhésion des couches ultérieures dans le produit final. Ces revêtements peuvent être toute couche de primaire antichoc classiquement utilisée pour les articles en matériau polymère transparent, tels que des lentilles ophtalmiques, et son décrits plus en détail dans la demande WO 2011/080472.

D'une façon générale, les revêtements antisalissure, également nommés revêtements hydrophobes ou top-coats, sont définis dans la présente demande comme des revêtements dont l'angle de contact statique avec de l'eau désionisé est supérieur ou égal à 75° de préférence supérieur ou égal à 80°, de préférence encore supérieur ou égal à 90°,

Un revêtement présentant un angle de contact de reculée avec l'eau supérieur à 80° est un revêtement hydrophobe selon la définition ci-dessus.

Dans la présente demande, les angles de contact statiques peuvent être déterminés selon la méthode de la goutte de liquide, selon laquelle une goutte de liquide ayant un diamètre inférieur à 2 mm (typiquement 4 µL) est déposée doucement sur une surface solide non absorbante et l'angle à l'interface entre le liquide et la surface solide est mesuré. L'eau a une conductivité comprise entre 0,3 µS et 1µS à 25°C.

Typiquement, les mesures d'angle de contact statique sont faites avec un appareil DSA 100 (Drop Shape analysis system) de Kruss.

Les valeurs d'angle de contact de reculée avec l'eau sont mesurées sur un plan incliné selon le mode opératoire décrit dans la partie expérimentale.

Les revêtements antisalissure réduisent la sensibilité de l'article à la salissure, par exemple vis-à-vis des dépôts graisseux. Comme cela est connu, ces revêtements externes hydrophobes, décrits en détail dans la demande WO 2009/047426, sont obtenus par application sur la surface de la lentille de composés diminuant son énergie de surface. De préférence, le revêtement externe hydrophobe appliqué sur la face avant et/ou arrière de la lentille a une énergie de surface égale ou inférieure à 20 mJ/m², de préférence encore égale ou inférieure à 14 mJ/m², mieux égale ou inférieure à 13 mJ/m² et encore mieux égale ou inférieure à 12 mJ/m².

Dans le cadre de la présente invention, leur épaisseur varie en général de 1 à 25 nm, mieux de 1 à 15 nm. Dans un mode de réalisation de l'invention, le revêtement antisalissure a une épaisseur inférieure à 10 nm, de préférence allant de 2 à 10 nm, mieux de 2 à 5 nm.

Les revêtements hydrophobes selon l'invention sont de préférence de nature organique. Par couche de nature organique, on entend une couche comprenant une proportion non nulle en masse, de préférence d'au moins 40 %, mieux d'au moins 50 % de matériaux organique par rapport à la masse totale de la couche.

Les revêtements de surface hydrophobes sont principalement obtenus à partir de compositions polymérisables contenant au moins un composé fluoré, mieux au moins un composé de nature silane et/ou silazane porteur d'un ou plusieurs groupes fluorés, en particulier des groupes hydrocarbonés fluorés, perfluorocarbonés, polyéther fluorés, tel que le groupe F₃C-(OC₃Fₑ)₂₄-O-(CF₂)₂-(CH₂)₂-O-CH₂-Si(OCH₃)₃ ou perfluoropolyéther.

Une méthode classique pour former un revêtement hydrophobe consiste à déposer des composés porteurs de groupes fluorés et de groupes Si-R, R représentant un groupe hydroxyle ou un groupe précurseur tel qu'un groupe hydrolysable, par exemple Cl, NH₂, NH- ou -O-alkyl, de préférence un groupe alcoxy. Ils sont de préférence fabriqués à partir de fluorosilanes ou fluorosilazanes précurseurs, comprenant de préférence au moins deux groupes hydrolysables par molécule. De tels composés sont capables de subir, lorsqu'ils sont déposés sur une surface, des réactions de polymérisation et/ou de réticulation, directement ou après hydrolyse.

Des fluorosilanes particulièrement adaptés pour former des revêtements hydrophobes sont ceux contenant des groupements fluoropolyéthers décrits dans le brevet US 6,277,485.

Ces fluorosilanes répondent à la formule générale : 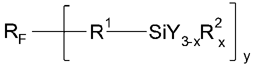 dans laquelle R_{F} est un groupe polyfluoropolyéther monovalent ou divalent, R¹ est un groupe divalent alkylène, arylène ou une combinaison de ceux-ci, contenant éventuellement un ou plusieurs hétéroatomes ou groupes fonctionnels et éventuellement substitués par des halogènes, et contenant de préférence 2 à 16 atomes de carbone ; R² est un groupe alkyle inférieur (c'est-à-dire un groupe alkyle en C₁-C₄) ; Y est un atome d'halogène, un groupe alcoxy inférieur (c'est-à-dire une groupe alcoxy en C₁-C₄, de préférence méthoxy ou éthoxy), ou un groupe acyloxy inférieur (c'est-à-dire -OC(O)R³ où R³ est un groupe alkyle en C₁-C₄) ; x est 0 ou 1 ; et y est 1 (R_{F} est monovalent) ou 2 (R_{F} est divalent). Les composés appropriés ont en général une masse molaire moyenne en nombre d'au moins 1000. De préférence, Y est un groupe alcoxy inférieur et R_{F} est un groupe perfluoropolyéther.

D'autres fluorosilanes ou fluorosilazanes recommandés sont ceux de formule : 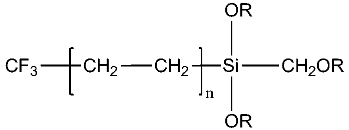 où n = 5, 7, 9 ou 11 et R est un groupe alkyle, de préférence en C₁-C₁₀ tel que -CH₃, -C₂H₅ et -C₃H₇ ;

CF₃(CF₂)₅CH₂CH₂Si(OC₂H₅)₃

((tridécafluoro-1,1,2,2-tétrahydro)octyl-triéthoxysilane) ;

CF₃-(C_{F}2)₇-CH₂-CH₂-Si (NH₂)₃

(composé OF110^{™} de la société Optron).

CF₃CH₂CH₂SiCl₃ ;

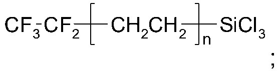

et 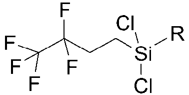 où n = 7 ou 9 et R est tel que défini ci-dessus.

Des compositions contenant des fluorosilanes également recommandées pour la préparation de revêtements hydrophobes sont décrites dans brevet US 6,183,872. Elles contiennent des fluoropolymères à groupements organiques porteurs de groupes à base de silicium représentés par la formule générale suivante et ayant une masse moléculaire de 5.10² à 1.10⁵ : 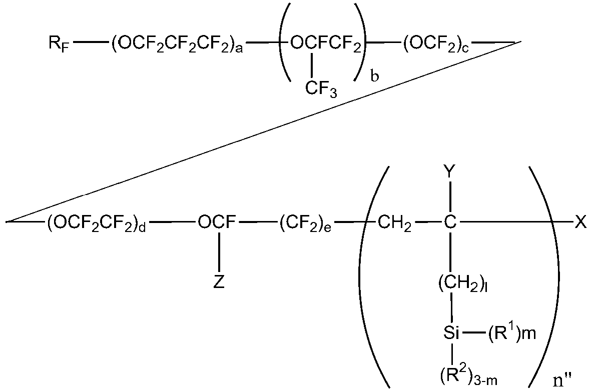 dans laquelle R_{F} représente un groupement perfluoroalkyle ; Z représente un groupe fluoro ou trifluorométhyle ; a, b, c, d et e représentent chacun, indépendamment l'un de l'autre, 0 ou un entier supérieur ou égal à 1, à la condition que la somme a+b+c+d+e ne soit pas inférieure à 1 et que l'ordre des unités répétitives figurant entre les parenthèses indexées sous a, b, c, d et e ne soit pas limité à celui représenté ; Y représente H ou un groupe alkyle comprenant de 1 à 4 atomes de carbone ; X représente un atome d'hydrogène, de brome ou d'iode ; R¹ représente un groupe hydroxyle ou un groupe hydrolysable ; R² représente un atome d'hydrogène ou un groupement hydrocarboné monovalent ; I représente 0, 1 ou 2 ; m représente 1, 2 ou 3 ; et n" représente un entier au moins égal à 1, préférentiellement au moins égal à 2.

D'autres composés convenant pour la formation de revêtements antisalissure à base de fluorosilanes sont décrits dans les brevets JP 2005-187936 et EP 1300433, et répondent à la formule : 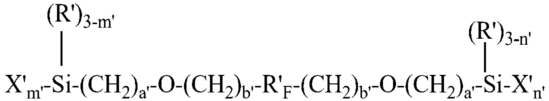 dans laquelle R'_{F} est un radical divalent perfluoropolyéther à chaîne linéaire, R' est un radical alkyle en C₁-C₄ ou un radical phényle, X' est un groupe hydrolysable, a' est un entier de 0 à 2, b' est un entier de 1 à 5, et m' et n' sont des entiers égaux à 2 ou 3.

Des compositions commerciales permettant de préparer des revêtements hydrophobes sont les compositions KY130^{®} (répondant à la formule du brevet JP 2005-187936) et KP 801M^{®} commercialisées par Shin-Etsu Chemical, OF210^{™} et OF110^{™} commercialisées par Optron, et la composition OPTOOL DSX^{®} (une résine fluorée comprenant des groupes perfluoropropylène répondant à la formule du brevet US 6,183,872) commercialisée par Daikin Industries. La composition OPTOOL DSX^{®} est la composition de revêtement antisalissure préférée.

Les méthodes de dépôt des compositions de revêtement antisalissure sont variées et comprennent le dépôt en phase liquide, tel que le dépôt au trempé, par centrifugation ou pulvérisation, ou le dépôt en phase vapeur, tel que l'évaporation sous vide.

Le dépôt en phase vapeur est préféré.

Une lentille selon l'invention comporte sur sa face arrière un revêtement hydrophobe qui peut être choisi parmi ceux présentés ci-dessus, lequel lui impartit un angle de contact de reculée avec l'eau WRA2 supérieur ou égal à 80°, de préférence supérieur ou égal à l'une des valeurs suivantes : 90°, 95°,100°, 102°, 105°, 110°, 111°, 112°, 113°, 114°, 115°, 116°, 117°, 118°, 119°, 120°, 125°. De préférences, ces valeurs sont aussi vérifiées par l'angle de contact statique avec l'eau du revêtement hydrophobe.

Dans un mode de réalisation, WRA2 est inférieur ou égal à l'une des valeurs suivantes : 119°, 118°, 117°, 116°.

Préférentiellement WRA2≥107°, et mieux varie de 107° à 125°

De préférence WRA2≥110° et mieux 110°≤ WRA2 ≤120°, encore mieux 112°≤ WRA2, De préférence 112°≤ WRA2 ≤120°.

De façon optimale, WRA2≥114°, mieux114°≤ WRA2 ≤120°.

Les angles de reculée WRA1 et WRA2 vérifient de préférence la relation :
2°≤ WRA2-WRA1 ≤12° et 104°<WRA1<116° et 110°≤ WRA2.

De préférence, WRA1 est supérieur ou égal à 65°, de préférence encore supérieur ou égal à 85°, mieux supérieur ou égal à 95°. L'angle de contact de reculée avec l'eau WRA1 varie de préférence de 102° à 116°, mieux de 105° à 116°.

Les surfaces externes des faces principales avant et arrière de la lentille de l'invention sont de préférence des surfaces de revêtements fluorés.

Dans un mode de réalisation, la lentille ophtalmique comporte en outre, sur sa face avant, un revêtement hydrophobe qui peut être choisi parmi ceux présentés ci-dessus, à condition bien entendu que la surface externe de sa face principale avant présente un angle de contact de reculée avec l'eau inférieur à celui de sa face principale arrière. Dans une telle lentille, la surface externe hydrophobe de ladite face principale avant présente de préférence un angle de contact de reculée avec l'eau supérieur ou égal à l'une des valeurs suivantes : 85°, 90°, 95°, 100°, 110°.

De préférence, la différence entre l'angle de contact de reculée avec l'eau de la surface externe de la face principale arrière et l'angle de contact de reculée avec l'eau de la surface externe de la face principale avant est supérieure ou égale à 1°, mieux supérieure ou égale à 2°, et encore mieux supérieure ou égale à 3°.et de préférence inférieure ou égale à 15°, mieux inférieur ou égal à 10° et mieux encore inférieur ou égal à 5°.

Un écart d'angle de contact de reculée de seulement 1° entre la face avant et la face arrière, bien qu'il paraisse de prime abord faible, se traduit en réalité par des différences **significatives** au niveau des performances antisalissure des deux faces, lorsque l'on se place à des niveaux d'angles de contact de reculée avec l'eau aussi élevés que 100°. Au-delà de 110°, un écart d'angle de contact de reculée de seulement 1° entre la face avant et la face arrière même s'il paraît faible, se traduit en réalité par des différences considérables au niveau des propriétés antisalissure des deux faces de la lentille.

Dans un mode de réalisation préféré, l'angle de contact de reculée avec l'eau de la surface externe de la face principale avant varie de 108° à 116°, mieux de 109° à 115°, et l'angle de contact de reculée avec l'eau de la surface externe de la face principale arrière est supérieur à 115°, mieux supérieur ou égal à 116° et encore mieux supérieur ou égal à 117°.

Une lentille selon l'invention, dans son état final, ne comporte pas de couche temporaire sur sa face principale arrière, ce qui signifie soit qu'elle a été retirée après son dépôt, soit qu'aucune couche temporaire n'a été déposée. Une lentille selon l'invention, dans son état final, ne comporte pas (non plus) de couche temporaire sur sa face principale avant. Dans un mode de réalisation, sa face principale arrière n'est pas revêtue et n'a pas été revêtue d'une couche temporaire.

La lentille ophtalmique selon l'invention de préférence n'absorbe pas dans le visible ou absorbe peu dans le visible, ce qui signifie, au sens de la présente demande, que son facteur de transmission dans le visible □ᵥ, encore nommé facteur relatif de transmission dans le visible, est supérieur à 90 %, mieux supérieur à 95 %, mieux encore supérieur à 96 % et de façon optimale supérieure à 97 %.

Plusieurs moyens de parvenir à des lentilles selon l'invention, différenciées au niveau de leurs propriétés hydrophobes sur leurs deux faces, vont maintenant être décrits sans que l'invention ne soit limitée à ces moyens spécifiques, ainsi que des lentilles ophtalmiques obtenues par ces procédés, qui font également l'objet de l'invention.

Une première technique pour parvenir à une lentille ayant des propriétés hydrophobes différenciées sur sa face avant et sa face arrière consiste à déposer des revêtements hydrophobes différents sur ses deux faces.

L'invention concerne donc un procédé de préparation d'une lentille ophtalmique, comprenant :
- fournir un substrat ayant une face principale avant et une face principale arrière,
- déposer un revêtement hydrophobe sur ladite face principale avant conférant à cette face principale avant un angle de contact de reculée avec l'eau WRA1 et un revêtement sur ladite face principale arrière du substrat conférant à cette face principale arrière un angle de contact de reculée avec l'eau supérieur ou égal à 80°,
le revêtement hydrophobe de la face principale avant étant formé d'un matériau différent de celui du revêtement de la face principale arrière et tel que ladite face principale avant présente un angle de contact de reculée avec l'eau WRA1 inférieur à celui de ladite face principale arrière WRA2.

Des lentilles selon l'invention peuvent ainsi être obtenues en déposant un revêtement hydrophobe plus performant (c'est-à-dire conférant un angle de contact de reculée avec l'eau plus élevé) sur leur face arrière que sur leur face avant. Par exemple, si le matériau Optool DSX^{®} est déposé sur la face arrière de la lentille (ou une bicouche Optool DSX/OF210), des matériaux antisalissure conduisant à l'obtention d'angles de contact de reculée avec l'eau moins élevés devront être déposés sur la face avant, comme par exemple les matériaux OF210 ou KY-130.

Les lentilles ci-dessus sont intéressantes car débordables sans qu'il soit nécessaire de déposer une couche temporaire sur leur face avant, du fait des énergies de surface plus faibles imparties par les matériaux OF210 et KY-130, qui évitent un glissement de la lentille pendant le débordage.

L'invention concerne également un procédé de préparation d'une lentille ophtalmique telle que décrite précédemment comprenant les étapes suivantes :
- fournir une lentille ophtalmique comprenant un substrat ayant :
   - une face principale avant recouverte d'une couche temporaire, la surface externe de ladite face principale avant étant hydrophobe et présentant, après retrait de ladite couche temporaire, un angle de contact de reculée avec l'eau WRA1,
   - une face principale arrière optionnellement recouverte d'une couche temporaire, la surface externe de ladite face principale arrière, après retrait de ladite couche temporaire si elle est présente, possédant un angle de contact de reculée avec l'eau WRA2 supérieur ou égal à 80°, WRA2 étant supérieur à WRA1.
      - éliminer la couche temporaire de la face principale avant de ladite lentille et, lorsqu'elle est présente, la couche temporaire de ladite face principale arrière.

L'invention concerne également un procédé de préparation d'une lentille ophtalmique, comprenant :
- fournir un substrat ayant une face principale avant et une face principale arrière,
- déposer un revêtement hydrophobe sur ladite face principale avant et un revêtement hydrophobe sur ladite face principale arrière du substrat qui confère à cette face principale arrière un angle de contact de reculée avec l'eau supérieur ou égal à 80°,
- former une couche temporaire d'épaisseur e1 sur le revêtement hydrophobe de ladite face principale avant et, optionnellement, une couche temporaire d'épaisseur e2 < e1 sur le revêtement hydrophobe de ladite face principale arrière,
- éliminer la couche temporaire de la ladite face principale avant et, lorsqu'elle est présente, la couche temporaire de ladite face principale arrière.

Dans un mode de réalisation de ce procédé de l'invention, une couche temporaire d'épaisseur e2 non nulle et inférieure à e1 est formée sur le revêtement hydrophobe de la face principale arrière de la lentille.

L'un des moyens de parvenir à une lentille selon l'invention est d'utiliser le même matériau pour former le revêtement hydrophobe de la face avant et de la face arrière de la lentille. En d'autres termes, la lentille a une face principale avant et une face principale arrière dont les surfaces externes sont celles de revêtements formés du même matériau. Les inventeurs ont en effet découvert que le choix d'utiliser une couche temporaire d'épaisseur plus faible (voire nulle) en face arrière permettait l'obtention d'un angle de contact de reculée avec l'eau plus élevé sur la face arrière par rapport à la face avant après retrait de la ou des couches temporaires, et donc de performances antisalissure supérieures. Le choix de l'utilisation d'une couche temporaire plus fine est également avantageux dans la mesure où celle-ci est plus facile à éliminer.

Un autre moyen de parvenir à une lentille selon l'invention est de déposer un revêtement hydrophobe plus performant (c'est-à-dire conférant sans avoir été revêtu d'une couche temporaire un angle de contact de reculée avec l'eau plus élevé) sur la face arrière que sur la face avant de la lentille.

Dans le mode de réalisation où des couches temporaires d'épaisseurs différentes sont employées, le ratio d'épaisseur des couches temporaires e1/e2 est de préférence supérieur ou égal à 1,25, de préférence encore supérieur ou égal à 1,5, mieux supérieur ou égal à 1,75, et encore supérieur ou égal à 2. Ce ratio est de préférence inférieur ou égal à 5, mieux inférieur ou égal à 4, car une couche temporaire trop épaisse deviendrait trop difficile à retirer après l'opération de débordage.

Dans un autre mode de réalisation de l'invention, et de préférence lorsque le revêtement hydrophobe de la face principale avant et le revêtement hydrophobe de la face principale arrière sont formés du même matériau, le revêtement hydrophobe de la face principale avant, caractérisé par son angle de contact de reculée avec l'eau WRA1, est déposé avant que ne soit déposé le revêtement hydrophobe de la face principale arrière, caractérisé par son angle de contact de reculée avec l'eau WRA2, et la face principale arrière de la lentille ophtalmique a subi un prétraitement d'activation physique ou chimique (pouvant être choisi parmi les prétraitements décrits précédemment) avant le dépôt du revêtement hydrophobe sur ladite face principale arrière mais après ou pendant le dépôt du revêtement hydrophobe sur ladite face principale avant. On utilise ce procédé de dépôt en particulier lorsque la face concave n'est pas revêtue d'une couche temporaire.

La couche temporaire présente sur la face avant de la lentille a une épaisseur variant de préférence de 30 à 45 nm. La couche temporaire présente sur la face arrière de la lentille avant a une épaisseur variant de préférence de 15 à 30 nm.

Dans ce dernier cas, ce mode de réalisation est associé à l'utilisation en face avant de la lentille d'un revêtement hydrophobe d'épaisseur plus élevée, dont les performances, notamment antisalissure, sont améliorées et plus durables que celles d'un revêtement de plus faible épaisseur.

Il faut savoir en effet que l'épaisseur de la couche temporaire présente sur la face avant dépend étroitement de l'épaisseur du revêtement hydrophobe sur cette même face. Plus le revêtement hydrophobe de la face avant est épais, plus la couche temporaire de la face avant doit être épaisse pour pouvoir remplir son rôle d'adhésion au moyen de maintien durant le débordage. Au contraire, en face arrière de la lentille, l'épaisseur du revêtement hydrophobe et celle de la couche temporaire ne sont pas liées, les inventeurs ayant constaté que cette dernière pouvait être omise dans le cas où la face avant permet à elle seule d'assurer le bon maintien de la lentille. Dès lors, sa présence n'est pas indispensable pour assurer le maintien de la lentille pendant l'opération de débordage, ce qui est expliqué ci-après.

**Il** sera préférable d'utiliser en face avant l'épaisseur de couche temporaire la plus faible possible permettant de réaliser un débordage fiable de la lentille, afin de limiter au mieux la difficulté supplémentaire de l'enlèvement de cette couche temporaire.

Dans un autre mode de réalisation de ce procédé de l'invention, aucune couche temporaire n'est formée sur le revêtement hydrophobe de la face principale arrière de la lentille (e2 = 0). Les inventeurs ont découvert qu'un tel dépôt de couche temporaire sur la face arrière n'était généralement pas nécessaire, la présence d'une couche temporaire uniquement sur la face avant de la lentille étant suffisante dans les conditions indiquées ci-dessus.

La lentille est en effet fixée au dispositif de débordage par l'intermédiaire de sa face avant, et il a été constaté que de l'ordre de 70 % des efforts mécaniques exercés au cours du débordage l'étaient sur la face avant. Ainsi, une mauvaise adhésion du moyen de maintien sur la face avant de la lentille peut aboutir à un désaxage du verre pendant le détourage pour un effort mécanique bien moindre que celui nécessaire au même désaxage si un mauvais contact se produit entre la face arrière de la lentille et la butée de détourage. Un bon maintien de la lentille au cours du débordage demande donc essentiellement une bonne adhérence du moyen de maintien à la face avant de la lentille.

Ce mode de réalisation est très intéressant en termes de productivité sur le plan industriel, car il diminue le temps de cycle en supprimant en outre l'étape d'élimination de couche temporaire sur une des faces. En outre, il permet de bénéficier de propriétés antisalissure optimales sur la face arrière de la lentille, celles-ci n'ayant pas été affectées par un dépôt de couche temporaire.

Dans ce cas de figure, l'un des moyens de parvenir à une lentille selon l'invention est d'utiliser le même matériau pour former le revêtement hydrophobe de la face avant et de la face arrière de la lentille, en particulier le matériau Optool DSX^{®}. Lorsque le revêtement hydrophobe de la face principale avant et le revêtement hydrophobe de la face principale arrière sont formés du même matériau, le dépôt d'une couche temporaire sur le revêtement hydrophobe de la face avant puis son retrait fournira une lentille dont le revêtement hydrophobe de la face avant aura un angle de contact de reculée avec l'eau inférieur à celui de la face arrière, qui n'aura pas subi de dépôt puis de retrait de couche temporaire.

Un autre moyen de parvenir à une lentille selon l'invention est de déposer un revêtement hydrophobe plus performant (c'est-à-dire conférant sans avoir été revêtu d'une couche temporaire un angle de contact de reculée avec l'eau plus élevé) sur la face arrière que sur la face avant de la lentille.

**Il** est à noter qu'il est préférable de former les revêtements sur la face avant de la lentille avant de les former sur la face arrière de la lentille, surtout si aucune couche temporaire n'est présente sur la face arrière de la lentille, car ces dépôts de revêtements impliquent le plus souvent un pré-traitement d'activation physique ou chimique (pouvant être choisi parmi les pré-traitements décrits précédemment) ou un traitement d'assistance, par exemple d'assistance ionique, à l'origine d'une légère dégradation des propriétés antisalissure du revêtement hydrophobe qui aura été déposé en premier du fait du phénomène de rétrodiffusion des espèces énergétiques et/ou réactives précédemment expliqué. Réaliser le traitement de la face avant de la lentille avant celui de la face arrière contribue à l'obtention d'une lentille selon l'invention en diminuant légèrement l'angle de contact de reculée avec l'eau de la surface externe de la face principale avant de la lentille.

L'invention concerne donc un procédé de préparation d'une lentille ophtalmique comprenant :
a) fournir une lentille ophtalmique ayant une face principale avant et une face principale arrière,
b) déposer des revêtements sur la face principale avant de la lentille ophtalmique, dont un revêtement hydrophobe,
c) déposer un ou plusieurs revêtements sur la face principale arrière de la lentille ophtalmique, postérieurement à l'étape b),
d) récupérer une lentille ophtalmique dont la surface externe de la face principale arrière présente un angle de contact de reculée avec l'eau WRA2 supérieur ou égal à 80° et dont la surface externe de la face principale avant est hydrophobe et présente un angle de contact de reculée avec l'eau WRA1, WRA2 étant supérieur à WRA1,
   un traitement par des espèces énergétiques rétrodiffusant sur la face principale arrière de la lentille ophtalmique ayant été réalisé sur la face principale avant de ladite lentille ophtalmique, avant l'étape c), et un traitement par des espèces énergétiques rétrodiffusant sur la face principale avant de la lentille ophtalmique ayant été réalisé sur la face principale arrière de ladite lentille ophtalmique, après l'étape b) et avant l'étape d).

Par espèces énergétiques (et/ou réactives), on entend notamment des espèces ayant une énergie allant de préférence de 1 à 300 eV, préférentiellement de 1 à 150 eV, mieux de 10 à 150 eV, et mieux encore de 40 à 150 eV. Les espèces énergétiques peuvent être des espèces chimiques telles que des ions, des radicaux, ou des espèces telles que des photons ou des électrons.

L'invention concerne également les lentilles ophtalmiques obtenues par les procédés décrits ci-dessus, notamment une lentille ophtalmique dont la surface externe de sa face principale avant est hydrophobe et présente un angle de contact de reculée avec l'eau WRA1 et dont la surface externe de sa face principale arrière présente un angle de contact de reculée avec l'eau WRA2 supérieur ou égal à 80°, WRA2 étant supérieur à WRA1, ladite lentille étant obtenue en formant une couche temporaire d'épaisseur e1 sur la surface externe de sa face principale avant et, optionnellement, une couche temporaire ayant de préférence une épaisseur e2 < e1 sur la surface externe de sa face principale arrière, et en éliminant la couche temporaire de la ladite face principale avant et, lorsqu'elle est présente, la couche temporaire de ladite face principale arrière. Comme indiqué ci-dessus, le revêtement hydrophobe de la face principale avant et le revêtement hydrophobe de la face principale arrière sont de préférence formés du même matériau, et aucune couche temporaire n'est de préférence formée sur le revêtement hydrophobe de ladite face principale arrière.

Les couches temporaires utilisables dans les procédés de l'invention pour revêtir avant débordage une surface hydrophobe de lentille vont maintenant être décrites d'une façon plus générale. Dans la présente demande, une couche temporaire est un revêtement susceptible de rendre la lentille apte au débordage et destiné à être éliminé/retiré après le débordage de la lentille ophtalmique.

La couche temporaire employée dans le cadre de l'invention est généralement formée directement sur un revêtement hydrophobe.

La couche temporaire peut être de nature minérale ou organique. Dans une réalisation préférée, la couche temporaire est une couche minérale, et comprend en particulier au moins un fluorure métallique ou un mélange de fluorures métalliques, au moins un oxyde métallique ou un mélange d'oxydes métalliques, au moins un hydroxyde métallique ou un mélange d'hydroxydes métalliques. On peut également utiliser un mélange de fluorures métalliques et d'oxydes et/ou d'hydroxydes métalliques.

Comme exemple de fluorures métalliques, on peut citer le fluorure de magnésium MgF₂, de lanthane LaF₃, d'aluminium AlF₃ ou de cérium CeF₃. De préférence, on utilisera le fluorure de magnésium.

Des oxydes utilisables métalliques sont les oxydes de magnésium (MgO), de calcium (CaO), de titane (notamment TiO₂), de silice, d'aluminium (Al₂O₃), de zirconium (ZrO₂), ou de praséodyme (Pr₂O₃). Les oxydes de métalloïdes sont considérés comme des oxydes métalliques dans la présente demande. Des mélanges d'alumine et d'oxyde de praséodyme sont recommandés. Un matériau commercial particulièrement recommandé est le PASO2 de la société LEYBOLD.

Comme exemple d'hydroxydes métalliques, on peut citer Mg(OH)₂, Ca(OH)₂ et Al(OH)₃, de préférence Mg(OH)₂.

La couche temporaire peut également être de nature organique, et en particulier être à base de matériaux polymères. A titre d'exemple de matériaux polymères convenant pour la couche temporaire on peut citer les encres de marquage pour verres ophtalmiques progressifs et/ou les résines constituant le liant de ces encres ainsi que les résines alkyde.

On peut également citer les polymères halogénés, notamment des polymères chlorés et/ou fluorés, notamment des résines de polyoléfine chlorées (par exemple une résine de polypropylène chloré), les polyalkylène téréphtalates (par exemple le polyéthylènetéréphtalate) et leurs mélanges. Ces matériaux sont décrits dans la demande internationale WO 2005/015270.

Les couches temporaires minérales sont préférées.

La couche temporaire peut être monocouche ou multicouche, ce qui signifie que plusieurs couches temporaires à base de matériaux identiques ou différents peuvent être formées les unes sur les autres. En particulier, la couche temporaire peut comprendre une couche d'un fluorure métallique, de préférence MgF₂, sur laquelle est déposée une couche d'un oxyde ou hydroxyde métallique non fluoré, de préférence MgO ou Mg(OH)₂, mieux MgO.

L'épaisseur de la couche temporaire selon l'invention peut varier de 1 nm à 150 µm. Lorsqu'elle est constituée d'une matière minérale, l'épaisseur de la couche temporaire est préférentiellement ≥ 5 nm, mieux ≥ 10 nm et de préférence ≤ 200 nm, mieux ≤ 100 nm et encore mieux ≤ 50 nm. Elle varie typiquement de 5 à 200 nm, de préférence de 5 à 100 nm, mieux de 10 à 50 nm.

Dans le cas des matériaux organiques, en particulier de matériaux polymères, il est préférable de déposer des épaisseurs beaucoup plus élevées que dans le cas de couches purement minérales. Les épaisseurs requises peuvent alors varier de 5 à 150 micromètres.

D'une manière générale, si l'épaisseur de la couche temporaire est trop faible, on risque de modifier insuffisamment l'énergie de surface. Si au contraire, l'épaisseur de la couche temporaire est trop élevée, en particulier pour les couches essentiellement minérales, il risque d'apparaître des contraintes mécaniques au sein de la couche, ce qui peut être préjudiciable aux propriétés attendues.

La couche temporaire présente de préférence une énergie de surface d'au moins 15 mJ/m², mieux d'au moins 25 mJ/m². Typiquement, l'énergie de surface de la couche temporaire est de 15 à 70 mJ/m², de préférence de 25 à 70 mJ/m².

La couche temporaire peut être déposée par tout procédé classique convenable, en phase vapeur (dépôt sous vide), ou en phase liquide, par exemple par pulvérisation, centrifugation, ou trempage, ou par transfert à partir d'un film électrostatique. La couche temporaire est de préférence déposée par voie gazeuse, notamment par évaporation sous vide. Le dépôt par traitement sous vide permet un contrôle précis de l'épaisseur de la couche temporaire et minimise les dispersions, ce qui n'est pas forcément le cas des autres solutions techniques disponibles. En outre, ce traitement sous vide présente l'avantage de pouvoir être directement intégré au procédé industriel de traitement des articles d'optique, en particulier lorsque ceux-ci sont équipés d'un revêtement antireflet.

La couche temporaire est de préférence formée sur la totalité d'une surface principale de la lentille, c'est-à-dire de façon à ce qu'elle recouvre totalement le revêtement hydrophobe,

Le matériau de la couche temporaire selon l'invention est susceptible d'être éliminé lors d'une opération ultérieure postérieure à l'étape de débordage. Le matériau de cette couche temporaire possède aussi une force de cohésion suffisante de façon à ce que le retrait de la couche temporaire s'effectue sans laisser de résidus à la surface du revêtement hydrophobe.

De préférence, et tout particulièrement lorsque la couche protectrice temporaire est déposée sur la totalité d'une des faces de la lentille, le matériau présente un certain degré de transparence de sorte qu'il reste possible d'effectuer sur la lentille revêtue de cette couche temporaire des mesures classiques de puissance par un frontofocomètre. La couche temporaire peut subir un marquage au moyen d'encres de marquage diverses, communément utilisées par l'homme de l'art pour les verres progressifs.

La couche temporaire selon l'invention présente l'intérêt de pouvoir être éliminée très facilement. Ceci peut être effectué soit en milieu liquide, soit par essuyage, notamment à sec, soit encore par une mise en œuvre combinée de ces deux moyens. D'autres méthodes d'élimination en milieu liquide sont décrites notamment dans la demande WO 03/057641. Un essuyage au moyen d'un tissu ou chiffon est la technique d'élimination préférée. Elle est de préférence réalisée manuellement.

D'autres couches temporaires ainsi que leurs procédés de dépôt et d'enlèvement sont décrits dans les demandes EP 2088133, EP 1392613, et WO 2009/071818.

L'invention concerne également des lentilles ophtalmiques intermédiaires, formées ou utilisables dans les procédés décrits ci-dessus, qui comprennent au moins une couche temporaire sur au moins une de leurs faces principales. L'invention concerne en particulier une lentille ophtalmique comprenant un substrat ayant :
- une face principale avant recouverte d'une couche temporaire, la surface externe de ladite face principale avant étant hydrophobe et présentant, après retrait de ladite couche temporaire, un angle de contact de reculée avec l'eau WRA1, et
- une face principale arrière optionnellement recouverte d'une couche temporaire, la surface externe de ladite face principale arrière, après retrait de ladite couche temporaire si elle est présente, étant hydrophobe et présentant un angle de contact de reculée avec l'eau WRA2 supérieur ou égal à 80°, la surface externe de ladite face principale avant présentant (après retrait de ladite couche temporaire) un angle de contact de reculée avec l'eau WRA1 inférieur à celui de la face principale arrière WRA2.

Une telle lentille est une lentille intermédiaire, rendue apte au débordage par la couche temporaire, qui conduira, après retrait de la couche temporaire de la face avant et de la couche temporaire éventuellement présente sur la face arrière, à une lentille selon l'invention.

Cette lentille ophtalmique intermédiaire comporte généralement un revêtement hydrophobe sur sa face arrière, et de préférence un revêtement hydrophobe sur sa face avant, lequel a été ultérieurement revêtu de ladite couche temporaire. Les couches temporaires et revêtements hydrophobes sont choisis parmi ceux et celles décrits précédemment. Le revêtement hydrophobe de la face principale avant et le revêtement hydrophobe de la face principale arrière peuvent être ou non formés du même matériau.

Dans un mode de réalisation, la face principale arrière de cette lentille n'est pas revêtue et n'a pas été revêtue d'une couche temporaire. Dans un autre mode de réalisation, la face principale arrière est revêtue d'une couche temporaire dont l'épaisseur est inférieure à celle de ladite couche temporaire recouvrant la face principale avant. Les ratios d'épaisseur envisageables pour les couches temporaires e1/e2 ont été décrits précédemment.

Une lentille ophtalmique intermédiaire préférée comprend un revêtement hydrophobe en face avant et en face arrière, formés de préférence du même matériau qui contient de préférence au moins un composé fluoré, mieux au moins un composé de nature silane et/ou silazane porteur d'un ou plusieurs groupes fluorés (en particulier le matériau Optool DSX^{®}), aucune couche temporaire en face arrière, et un revêtement temporaire en face avant, qui peut être multicouche, et comprend de préférence une couche de MgF₂ revêtue d'une couche de MgO. Les épaisseurs préférées pour ces différentes couches ont été indiquées précédemment. Sur la face avant, la couche de MgF₂ a une épaisseur idéale variant de 30 à 40 nm et le revêtement hydrophobe a une épaisseur idéale variant de préférence de 1 à 10 nm. Sur la face arrière, le revêtement hydrophobe a une épaisseur idéale variant de 2 à 8 nm.

Les lentilles ophtalmiques décrites ci-dessus, qui comportent au moins une couche temporaire, peuvent être soumises à un procédé de débordage, qui comporte les étapes suivantes :
- la fixation de la lentille ophtalmique à un dispositif de maintien par l'intermédiaire d'un moyen de maintien tel qu'un patin adhésif adhérant à la surface de la lentille ophtalmique (glantage) ;
- le montage du dispositif de maintien auquel adhère la lentille ophtalmique par l'intermédiaire du moyen de maintien dans un dispositif de débordage ;
- le débordage de la lentille ophtalmique par usinage de sa périphérie ; et
- après récupération de la lentille ophtalmique (déglantage), l'élimination de la couche temporaire de la ladite face principale avant et, lorsqu'elle est présente, l'élimination de la couche temporaire de ladite face principale arrière.

La couche temporaire, ou surcouche, permet d'appliquer directement le moyen de maintien sur la lentille ophtalmique, et de la maintenir fermement au cours de l'opération de débordage, d'une part en raison de sa bonne adhésion au revêtement hydrophobe, et d'autre part en améliorant l'adhérence normale et tangentielle du moyen de maintien à la surface de la lentille. De ce fait, elle évite les phénomènes de glissement et de désaxage, ainsi que le phénomène de déglantage, et permet de procéder à un débordage fiable.

En outre, elle permet un très bon maintien de la lentille après le débordage. Après l'opération de débordage principale de la lentille ophtalmique, on peut en effet souhaiter effectuer une opération de reprise de débordage, et/ou un perçage, la zone percée servant par exemple de point de fixation à une branche de monture de lunettes dans le cas d'un verre de lunettes. Pour ces dernières étapes, décrites notamment dans la demande WO 2009/071818, et en particulier pour le perçage du verre, il est fondamental que l'ensemble gland/moyen de maintien reste en position sur la surface de la lentille, car il constitue un repère permettant de positionner les forets pour le perçage des trous.

Les étapes de glantage, déglantage et les systèmes de maintien utilisables au cours de ce procédé, classiques pour l'homme du métier, sont décrits plus en détail dans les demandes EP 1392613 et WO 2010/055261.

Le procédé de débordage selon l'invention fournit des lentilles ophtalmiques ayant subi un désaxage maximum de 2°, et, de façon optimale, inférieur ou égal à 1°.

L'étape de débordage peut éventuellement être suivie d'une étape de reprise de débordage et/ou d'une étape de perçage, avant que la ou les couches temporaires ne soient éliminées.

Les exemples suivants illustrent l'invention de façon plus détaillée mais non limitative. Sauf indication contraire, toutes les épaisseurs figurant dans la présente demande sont des épaisseurs physiques.

Après leur préparation, selon la nature de la couche hydrophobe, il peut être nécessaire d'effectuer un traitement mécanique de surface pour « révéler » les propriétés d'hydrophobie et obtenir les performances attendues.

C'est en particulier le cas pour les couches hydrophobes obtenues à partir du KY130. En général, les propriétés des couches obtenues à partir de l'OPTOOL DSX sont obtenues sans qu'il soit nécessaire de procéder à ce traitement mécanique (essuyage par un chiffon imprégné d'eau désionisée).

Les mesures des angles de contact de reculée sont effectuées sur des verres qui ont fait l'objet du traitement mécanique. On donne ci-après un traitement mécanique adapté (essuyage par un tissu CEMOI).

Le tissu CEMOI^{™} est un tissu en microfbres (fabricant KB SEIREN- distributeur : Facol) dont la composition est polyester 70% / Nylon^{™} 30% et qui est communément utilisé pour nettoyer des verres de lunettes.

A l'aide d'un robot mécanisé, on effectue un essuyage mécanisé.

La lentille est placée sur un support. Le tissu CEMOI est imbibé d'eau désionisée puis placé sur le verre. Un levier d'un poids de 3 kg est descendu pour contacter le tissu. Le levier présente un embout mousse de diamètre environs 3 cm.

On effectue 60 aller-retour en 1 minute. L'embout suit la forme de la lentille dans son déplacement.

Après traitement, les lentilles sont essuyées avec un tissu Cémoi propre et soufflées avec une soufflette à air comprimé.

La mesure d'angle de contact de reculée se fait dans la zone essuyée, au centre.

L'angle de contact de reculée est défini dans la thèse de doctorat - Université Paris 7 - Denis Diderot, présentée par Nolwenn Le Grand - Piteira et soutenue à l'ESCPI le 21 juin 2006, en particulier Chapitre 1, pages 19-20, paragraphe 1.3.4 « Une loi insuffisante dans la réalité - Hystérésis du mouillage ».

Les mesures ont été effectuées à l'aide d'un goniomètre semi-automatique par acquisition et analyse d'images de chez KRUSS-DSA100 équipé de l'option table inclinable (PA3220).

Principe : Les mesures d'angle de contact de reculée avec l'eau peuvent être effectuées sur une surface convexe d'une lentille ophtalmique, ou chacune des surfaces d'un substrat bi-plan (plan face avant et plan face arrière), chacune des faces ayant reçu les différentes couches selon l'invention, en suivant le protocole décrit ci-après pour une face convexe d'une lentille.

### Mesures d'angle de contact de reculée avec l'eau sur des substrats convexes :

Les mesures sont réalisées au centre géométrique de la face convexe de verres sphériques avec un rayon de courbure > 100 mm.

La mesure se déroule en trois étapes :
- application d'une goutte d'eau désionisée d'un volume de 25 µl au centre géométrique ;
- inclinaison automatique de la table à vitesse constante (3°/seconde) et acquisition continue de l'image de la goutte en mouvement ;
- analyse d'images issues de la séquence d'acquisition avec détermination de la vitesse de déplacement de la goutte et des angles de contact au point triple à l'arrière de la goutte θr. Il s'agit de l'angle de contact formé entre la tangente à la goutte au pont triple (jonction air/eau/solide) et la tangente à la surface du verre au même point triple, la goutte étant examinée de profil. Par convention, l'angle est celui situé à l'intérieur de la goutte.

L'angle de contact de reculée avec l'eau θr correspond à l'angle de contact déterminé au point opposé au sens du mouvement de la goutte.

La valeur de l'angle de contact de reculée avec l'eau considérée dans les essais décrits dans la présente demande, est la moyenne des valeurs d'angles pour lesquelles la vitesse de déplacement de la goutte est comprise entre 0,05 et 0,1 mm/seconde.

Les mesures d'angle de contact peuvent être également effectuées suivant le même protocole sur des surfaces concaves. Dans ce cas, il est souhaitable d'utiliser des lentilles possédant de faibles courbures en face arrière, soit R>200 mm.

Il est possible de procéder à un débordage des lentilles pour garder la partie centrale du verre et effectuer la mesure sur cette partie centrale.

### Exemples

Les lentilles sur lesquelles sont déposées les différentes couches sont des lentilles thermoplastiques en PC (polycarbonate), de diamètre 70 mm,

Les lentilles comportent sur chacune de leurs faces principales, déposés dans cet ordre : un revêtement de primaire antichoc de polyuréthane d'une épaisseur de l'ordre de 1 micron (W234^{®}), un revêtement anti-abrasion d'une épaisseur de l'ordre de 3 microns obtenu en déposant et durcissant une composition telle que définie dans l'exemple 3 du brevet EP 614957, le revêtement antireflet à cinq couches ZrO₂/SiO₂/ZrO₂/ITO/SiO₂ décrit dans la demande WO 2011/080472, et un revêtement antisalissure de 5 nm d'épaisseur à base d'Optool DSX^{®} de la société Daikin Industries (dépôt sous vide à 3 x10⁻⁵ mbar, vitesse de dépôt : 0,4 nm/seconde, conditions identiques à celles utilisées dans la demande WO 2009/071818).

Ces lentilles sont traitées sur les deux faces selon les procédés décrits ci-après, la face concave (arrière) étant traitée avant la face convexe (avant).

### 1. Dépôt des couches temporaires

Dans l'exemple 1, des couches temporaires d'épaisseurs différentes ont été formées sur les deux faces de la lentille dans une enceinte à vide BAK.
Face arrière : traitement 1 : une couche temporaire de MgF₂ de 20 nm d'épaisseur a été formée sur le revêtement hydrophobe de la face arrière de la lentille (vitesse de dépôt : 1,5 nm/s, P=3.10⁻³ Pa, puis une couche de MgO de 1 à 2 nm d'épaisseur a été formée sur cette couche de MgF₂
Face avant : traitement 2 : Une couche temporaire de MgF₂ de 38 nm d'épaisseur a été formée sur le revêtement hydrophobe de la face avant de la lentille, puis une couche de MgO de 1 à 2 nm d'épaisseur a été formée sur cette couche de MgF₂, dans les mêmes conditions que ci-dessus.

Les lentilles obtenues sont soumises à une étape de débordage. Voir point 2 ci-dessous.

Les couches temporaires sont retirées par essuyage à sec avec un tissu, puis les angles de contact de reculée avec l'eau sont mesurés selon le protocole donné ci-dessus.

Angle de contact de reculée avec l'eau obtenu après retrait des couches temporaires)

L'angle de contact de reculée avec l'eau pour le revêtement face arrière (113°) est supérieur à celui du revêtement en face avant (111°).

### 2. Débordage des lentilles

Le test de débordage, effectué sur une meuleuse Essilor Kappa, ainsi que le protocole de mesure du désaxage subi par les lentilles au cours de cette opération, sont décrits en détail dans la demande WO 2009/071818. Au cours de ce test, le patin de maintien adhésif employé (LEAP Il de diamètre 24 mm GAM200 de la société 3M ou secure edge^{®} de la société Saint Gobain) est directement en contact avec la couche temporaire présente sur la face avant de la lentille. Une lentille est considérée comme passant le test de débordage si elle présente un désaxage de 2° ou moins.

### 3. Résultats et commentaires

La lentille de **l'exemple 1** présente des revêtements hydrophobes et/ou oléophobes d'épaisseurs relativement élevées sur ses deux faces avec une face arrière ayant un angle de contact de reculée avec l'eau supérieur en face arrière.

La lentille comporte une couche temporaire d'épaisseur plus élevée sur sa face avant (38 nm) que dans les lentilles classiques possédant une surcouche de 20 nm de MgF₂ telles que décrites dans le brevet US7629053 au nom de la demanderesse.

L'épaisseur de la couche temporaire sur la face arrière est la même que dans les lentilles classiques.

Les lentilles de cet exemple présentent un très bon comportement lors de l'opération de débordage (aucun glissement du patin de maintien ni désaxage). En outre, les couches temporaires ne sont avérées faciles à retirer.

Les lentilles selon l'invention, dont le taux d'hydrophobie entre la face avant et la face arrière a été modulé, sont plus performantes sur le plan de la salissure que les lentilles de l'art antérieur.

### Exemple 2

On prépare des lentilles en polycarbonate ou en verre haut indice (polythiouréthane, indice de réfraction 1,67) en effectuant les dépôts suivants :
- en face avant (convexe) : on dépose une couche d'Optool DSX de l'ordre de 5 nm puis traitement 1 : une couche temporaire de MgF₂ de 38 nm d'épaisseur est formée sur le revêtement hydrophobe de la face arrière de la lentille (vitesse de dépôt : 1,5 nm/s, P=3.10⁻³ Pa), puis une couche de MgO de 1 à 2 nm d'épaisseur a été formée sur cette couche de MgF₂.
- en face arrière (concave) : Dépôt d'une couche d'Optool DSX de 3 nm et pas dépôt de couche temporaire.

Angle de contact de reculée avec l'eau pour le revêtement face avant :111° après retrait de la couche temporaire

Angle de contact de reculée avec l'eau pour le revêtement face arrière :115°.

### Exemple 3

On prépare des lentilles en polycarbonate ou en verre haut indice (polythiouréthane, indice de réfraction 1,67) en effectuant les mêmes dépôts que dans l'exemple 1 :
- face avant (convexe) : on dépose une couche d'Optool DSX de l'ordre de 3 nm puis traitement 1 (dépôt de 20 nm d'épaisseur de MgF₂ suivi d'une couche d'épaisseur de 1 à 2 nm de MgO).
- face arrière (concave) : Dépôt d'une couche d'Optool DSX de 3 nm et pas dépôt de couche temporaire.

Angle de contact de reculée avec l'eau pour le revêtement face avant :108° après retrait de la couche temporaire.

Angle de contact de reculée avec l'eau pour le revêtement face arrière :115°.

Les résultats sont récapitulés dans le tableau 1 ci-dessous. Le désaxage moyen des verres est très faible et acceptable.

**Tableau 1**

| | **Accessoire (patin de maintien)** | **Stockage** | **Substrat** | **Désaxage** |
|---|---|---|---|---|
| **Exemple2** | **3M** | **7j RT** | **PC** | **88,7** |
| **Exemple2** | **3M** | **7j RT** | **1,67** | **89,1** |
| **Exemple2** | **SecurEdge** | **7j RT** | **PC** | **88,6** |
| **Exemple2** | **SecurEdge** | **7j RT** | **1,67** | **89,1** |
| **Exemple 3** | **3M** | **7j RT** | **PC** | **89,0** |
| **Exemple3** | **3M** | **7j RT** | **1,67** | **89,1** |
| **Ref** | **3M** | **7j RT** | **PC** | **88,9** |
| **Ref** | **3M** | **7j RT** | **1,67** | **89,2** |

| | | | | |
|---|---|---|---|---|
| RT : température ambiante 7j : 7 jours Ref : lentille de l'art antérieur | | | | |

## Revendications

1. Lentille ophtalmique comprenant un substrat ayant :
- une face principale avant dont la surface externe est hydrophobe et présente un angle de contact de reculée avec l'eau WRA1 et
- une face principale arrière dont la surface externe présente un angle de contact de reculée avec l'eau WRA2 supérieur ou égal à 110°, WRA2 étant supérieur à WRA1,
et 2°≤ WRA2-WRA1 ≤12° et 104°<WRA1<116°.

2. Lentille ophtalmique selon la revendication 1, **caractérisée en ce que** l'angle de contact de reculée avec l'eau WRA2 est supérieur ou égal à 115°.

3. Lentille ophtalmique selon l'une quelconque des revendications précédentes, **caractérisée en ce que** l'angle de contact de reculée avec l'eau WRA2 est supérieur ou égal à 117°.

4. Lentille ophtalmique selon l'une quelconque des revendications précédentes, **caractérisée en ce que** l'angle de contact de reculée avec l'eau WRA2 est supérieur ou égal à 120°.

5. Lentille ophtalmique selon l'une quelconque des revendications précédentes, **caractérisée en ce que** l'angle de contact de reculée avec l'eau WRA2 est inférieur ou égal à 125°.

6. Lentille ophtalmique selon l'une quelconque des revendications précédentes,
**caractérisée en ce que** WRA1 va de 105° à <116°.

7. Lentille ophtalmique selon l'une quelconque des revendications précédentes, **caractérisée en ce que** WRA1 varie de 108° à <116°.

8. Lentille ophtalmique selon l'une quelconque des revendications précédentes, **caractérisée en ce que** les surfaces externes des faces principales avant et arrière sont des surfaces de revêtements fluorés.

9. Lentille ophtalmique selon l'une quelconque des revendications précédentes, **caractérisée en ce qu'**elle a été obtenue en formant une couche temporaire sur la surface externe de ladite face principale avant et, optionnellement, une couche temporaire sur la surface externe de ladite face principale arrière, et **en ce que** l'on a éliminé la couche temporaire de la ladite face principale avant et, lorsqu'elle est présente, la couche temporaire de ladite face principale arrière.

10. Lentille ophtalmique selon l'une quelconque des revendications précédentes, **caractérisée en ce qu'**elle est insérée dans une paire de lunettes.

11. Lentille ophtalmique selon l'une quelconque des revendications précédentes, **caractérisée en ce que** la face principale arrière n'est pas revêtue et n'a pas été revêtue d'une couche temporaire.

12. Lentille ophtalmique comprenant un substrat ayant :
- une face principale avant revêtue d'une couche temporaire, la surface externe de ladite face principale avant étant hydrophobe et présentant, après élimination de ladite couche temporaire, un angle de contact de reculée avec l'eau WRA1, et
- une face principale arrière optionnellement revêtue d'une couche temporaire, la surface externe de ladite face principale arrière présentant, après élimination de ladite couche temporaire si elle est présente, un angle de contact de reculée avec l'eau WRA2 supérieur ou égal à 110°, WRA2 étant supérieur à WRA1, et 2°≤ WRA2-WRA1 ≤12° et 104°<WRA1<116°.

13. Procédé de préparation d'une lentille ophtalmique selon l'une quelconque des revendications 1 à 11, comprenant :
- fournir une lentille ophtalmique selon la revendication 12,
- éliminer la couche temporaire de la face principale avant de ladite lentille et, lorsqu'elle est présente, la couche temporaire de ladite face principale arrière.

14. Procédé selon la revendication 13, **caractérisé en ce que** l'on fournit une lentille ophtalmique ayant une face principale arrière revêtue d'une couche temporaire dont l'épaisseur est inférieure à celle de ladite couche temporaire recouvrant la face principale avant, et ladite lentille ophtalmique a une face principale avant et une face principale arrière dont les surfaces externes sont celles de revêtements formés du même matériau.

15. Procédé selon la revendication 13, **caractérisé en ce qu'**aucune couche temporaire n'est formée sur ladite face principale arrière.
